# EUROPEAN PATENT APPLICATION

(11) **EP 3 252 719 A1**
(43) Date of publication of application: **06.12.2017**
(21) Application number: 16172926.4
(22) Date of filing: 03.06.2016
(51) Int. Cl.: G07C 5/00

(54) **METHOD FOR DIAGNOSING FAULTS IN A VEHICLE, AND CORRESPONDING SYSTEM**

(71) Applicant: Magneti Marelli After Market Parts and Services S.p.A. a Socio Unico, 20011 Corbetta (Milano) (IT)
(72) Inventor: SCRIVANTI, Fabrizio, I-20011 Corbetta (Milano) (IT); TOSINI, Vanni, I-20011 Corbetta (Milano) (IT)
(74) Representative: Crovini, Giorgio

(57) **Abstract**

Described herein is a method for diagnosing faults in a vehicle, in particular a car, comprising a procedure (100) for diagnostic testing of the vehicle, which includes applying a set of diagnostic tests (TS) that are specific for the vehicle and obtaining, on the basis of said set of tests (TS), error indications (EC, DS) representing faults in said vehicle. It is envisaged to use (400) said error indications (DS) to access a data structure (23) comprising information (IR, DSR) regarding spare parts (R) of the vehicle and to obtain information (IR, DSR) regarding spare parts of the vehicle that corresponds to said error indications (DS) supplied by the diagnostic tests (TS).

## Description

The present invention relates to a method for diagnosing faults in a vehicle, in particular a car, comprising a procedure of diagnostic testing of the vehicle, which includes applying a set of diagnostic tests that are specific for the vehicle and obtaining, on the basis of said set of tests, error indications representing faults in said vehicle.

Known in the context of vehicles, including cars, are diagnostic systems and methods that envisage test modules controlled via a computer, in particular a personal computer, which can be connected to the diagnostic connector of the vehicle to conduct diagnostic analyses on the electronics, in particular the control unit of the vehicle, in order to carry out testing thereof. The test module is moreover provided with other test functions, for example the capacity of operating as oscilloscope. Loaded into the computer is a diagnostic software application with an interface for carrying out the tests and examining the results and a mode of search by vehicle, control unit, and engine code, in order to select a set of tests suited to the vehicle to be tested. This system is very practical for mechanics, in so far as they can select via the computer a set of tests suited to the vehicle to be tested, communicate with the control units of the vehicle via the test module, collect and display the results of the analyses, for example display operating parameters and states of the vehicle (e.g., engine r.p.m., fuel pressure, accelerator position, state of command of fuel-pump relay, etc.), and display error indications.

Hence, the above system is rather flexible, enabling acquisition of data in response to testing both via the diagnostic connector and via other channels such as oscilloscope and multi-meter channels.

However, once, via the system, the mechanic has identified errors, for example through display of corresponding error codes, and has checked that they effectively exist through failure analyses, which may also be carried out via the testing system, in order to evaluate the type of repair and hence of spare part to be applied to solve the error or failure, he must, on the basis of the error indications, query documentation regarding the spare parts. In the best of cases, after the failure and the type of repair have been identified, he can query a spare-part database, requesting information on a specific spare part. It is consequently a somewhat slow procedure.

The object of the present invention is to provide an improved method that will make it possible to obtain information on a spare part that can enable repair in the fastest time possible.

According to the present invention, the above object is achieved thanks to a diagnostic method as well as to a corresponding system having the characteristics recalled specifically in the ensuing claims.

The invention will be described with reference to the annexed drawings, which are provided purely by way of non-limiting example and in which:
- Figure 1 is a schematic view of a system implementing the method described herein;
- Figure 2 shows a flowchart representing an overall scheme of the method described herein;
- Figures 3, 4, 5, and 6 show flowcharts representing an embodiment of the method described herein; and

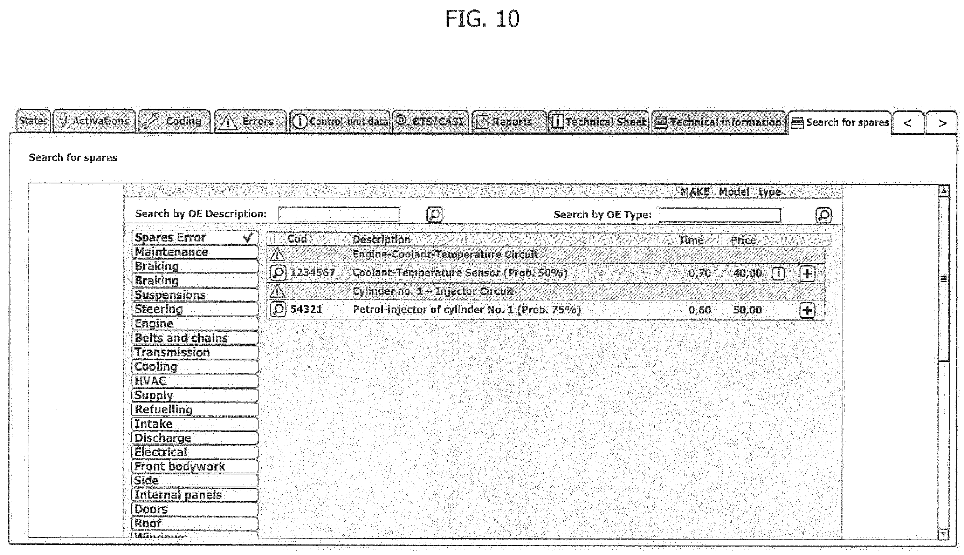

- Figures 7, 8, 9 and 10 show screenfuls of an application implementing the method according to the invention.

In brief, the solution according to the invention regards a method for diagnosing faults in a car, comprising a procedure for diagnostic testing of the car that includes applying a set of diagnostic tests that are specific for the car and obtaining, on the basis of said set of tests, error indications representing faults in said car, wherein the method includes using said error indications to access a data structure comprising information regarding spare parts of the car and obtaining information regarding spare parts of the car corresponding to said error indications supplied by the diagnostic tests.

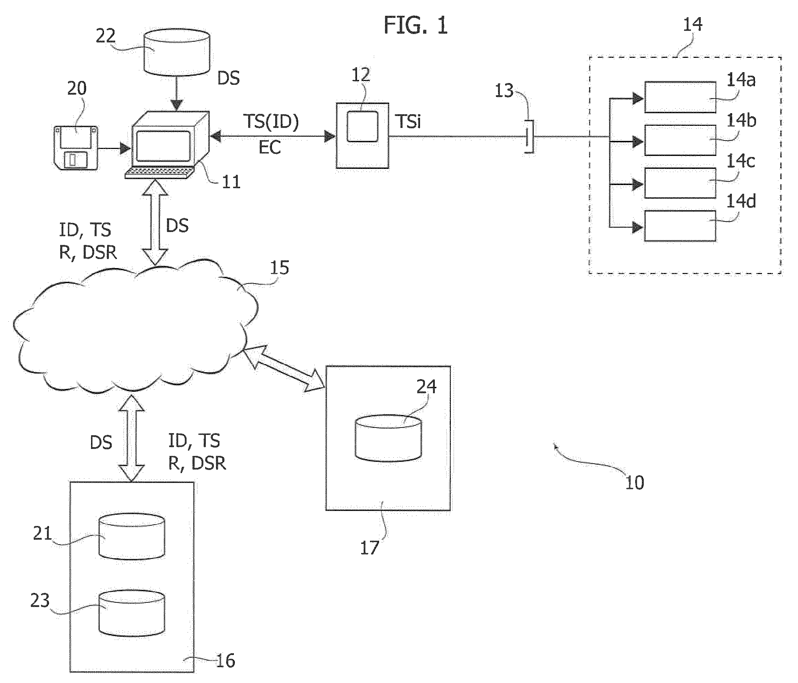

Figure 1 is a schematic illustration of a diagnostic system that implements the method according to the invention, designated as a whole by the reference number 10.

Designated by the reference 12 is a diagnostic module, i.e., a processor module, which comprises, for example, an oscilloscope and a multi-meter for acquiring signals and electrical quantities from the electronics of the vehicle. The test module 12 may also comprise a battery cable as well as other adapter cables for the diagnostic connector of the vehicle, such as current clamps and other accessories that enable the test module 12 to send and acquire signals and values of electrical quantities. Moreover, the test module 12 comprises a on-board diagnostic connector OBD2 for interfacing with the diagnostic connector 13 of the car, and a USB connector for interfacing with a computer 11, for example a portable personal computer. Of course, in various embodiments, the connector towards the computer 11 may be a serial cable, or an Ethernet cable, or some other type of cable supported by computers, and likewise the communication may occur via a wireless channel, for example Bluetooth. Designated as a whole by 14 is the electronics of the car, not represented in the figure, accessible via the OBD connector 13, comprising, for example, a plurality of control units, such as the ECU (Engine Control Unit) 14a, the TCU (Transmission Control Unit) 14b, the ABS (Antilock Braking System) control unit 14c, the ESP (Electronic Stability Program) control unit 14d and various other control units, i.e., electronic control boards for various functions such as air-conditioning, airbag control, control of lights, etc. As is known, there may be dozens of control boards, for the most part of a microprocessor type, which control various subsets of functions of the car.

Loaded into the computer 11 is a software application 20 that provides an interface (which in itself represents a so-called VCI - Vehicle Computer Interface) to mechanics for complex control of the test module 12. In particular, the application 20, in addition to providing a graphic interface for the user, enables selection of the vehicle under test. This selection occurs in terms of make and type, type of control unit, and type of engine. In this way, a specific vehicle is identified at the level of vehicle identification number (VIN), as is described in what follows. The specific vehicle is referred to in what follows as identified vehicle ID. Preferably, ID is an identifier code specific for the identified vehicle, used by the databases 21 and 23 on the server 16, as field of its own records regarding the specific vehicle ID or spare parts thereof, and hence as search key. Moreover, once the application 20 has selected the specific vehicle under test, it enables sending to the test module 12 of a set of tests TS corresponding to the specific vehicle. In the test module 12, once the set of tests TS has been loaded, the user can select testing of a specific system TSi, for example, of a specific control unit of the electronics 14, and inject it through the OBD connector 13.

Hence, the computer 11 is configured for accessing a database 21 of given vehicles, comprising, in addition to specific data of the vehicle, sets of tests TS each for a specific identified vehicle ID that is accessible through the application 20.

As may be noted, the computer 11 that executes the application 20 is configured for communicating remotely, for example via a communication network 15, for instance a GSM or UMTS mobile telecommunications network, and the Internet protocol, with remote servers. In particular, it is envisaged that the application 20 can set up a communication with a spare-part remote server 16. This server 16, in the embodiment described herein, houses databases for the mechanic regarding the components and the vehicles. In particular, the spare-part remote server comprises the database 21 so that the computer 11, via the application 20, operates as terminal for access to the database 21 for the operations of vehicle search and selection. The application 20 operates substantially as a client for access to the databases in the spare-part server 16.

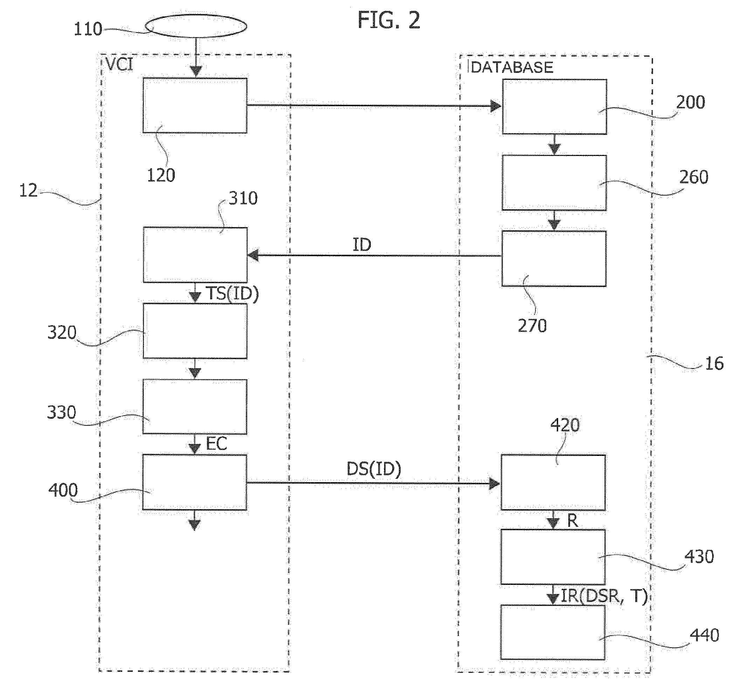

The spare-part server 16 in Figure 2 moreover houses a spare-part database 23. Moreover, according to a further aspect of the solution described herein, the application 20 is able to co-operate with other servers, in particular with a server 24, which may be a server of the Driver and Vehicle Licensing Agency, which comprises a database of motor-vehicle number plates 24.

Moreover, the application 20 manages in the computer 11 a database 22 of error descriptions DS available therein, which will be described in greater detail in what follows.

It should be noted that, as a whole, the vehicle database 21 and spare-part database 23 may in principle be available on different servers, located in different positions and even managed by different providers.

With reference to Figure 2, which shows an overall flowchart, the diagnostic method proposed is now illustrated, designated as a whole by the reference 100.

In this context, designated by 110 is a step of starting of a vehicle interface, i.e., the graphic interface of the diagnostic application 20, run on the computer 11 for control of the test module 12. In a step 120, the application 20 sets up a connection with the vehicle database 21, preferably available on the spare-part server 16. The vehicle database 21 houses the technical information of each specific vehicle, which can be identified via a search key such as, for example, the vehicle identification number VIN.

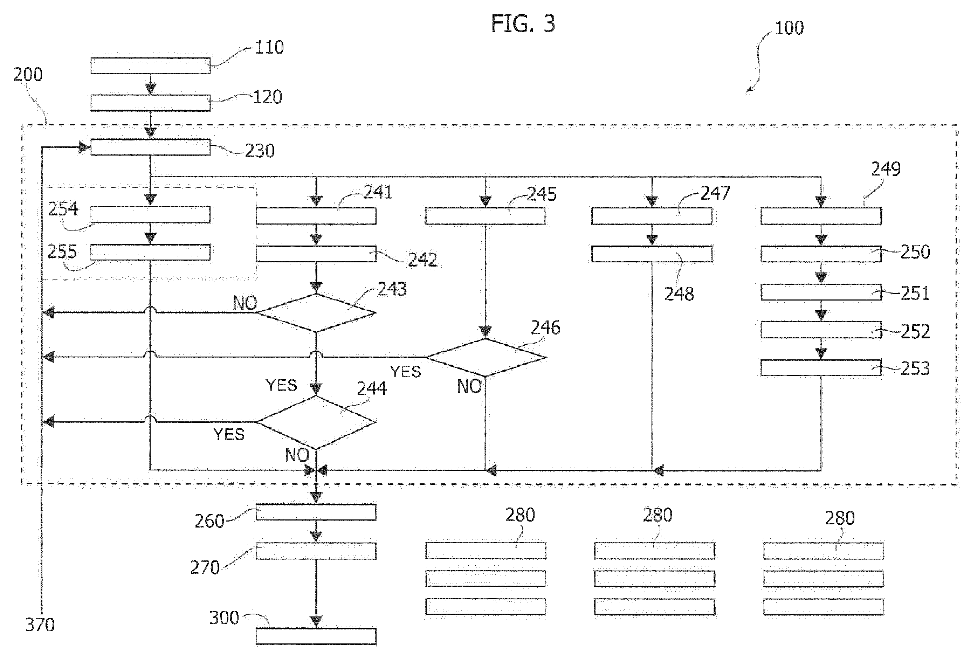

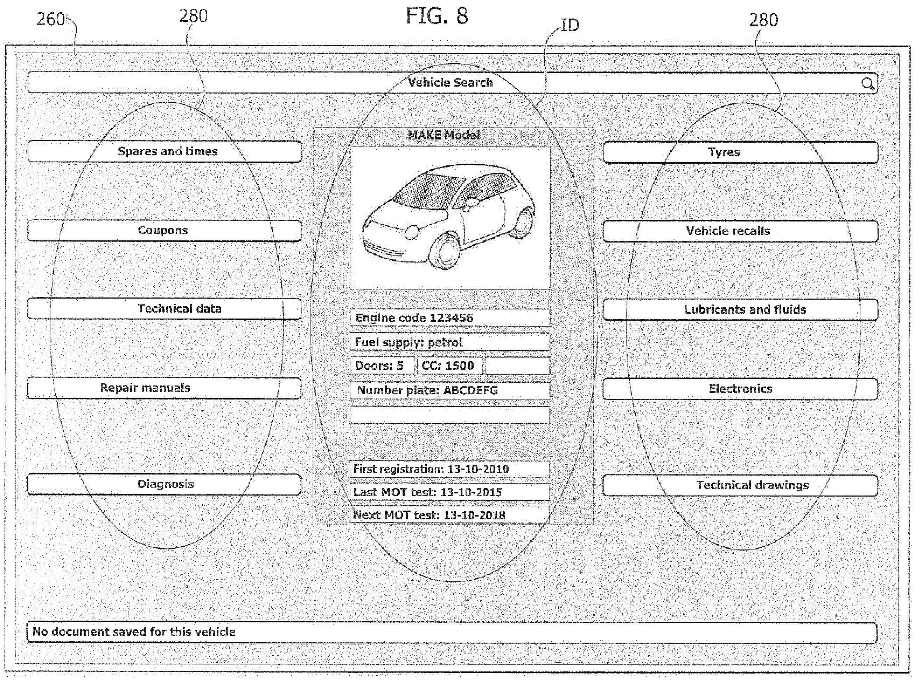

Consequently, in the context of a vehicle-selection procedure 200, by carrying out access to the server 16 via the application 20, it is possible to enter search keys according to different modes (see, for reference, in Figure 3, the modes 241, 245, 247, 249, 254) or obtaining display 260 of the vehicle selected. Figure 8 exemplifies the result of this display 260, and it may be noted how information is supplied on the vehicle ID such as engine code, type of fuel supply, number of doors, cubic capacity, taxable horse power, number plate, registration and MOT-test data, in addition to a set of further information 280 accessible from a menu and regarding technical drawings, coupons, technical data, vehicle recalls, lubricants and fluids, electronics, e-learning courses on tests and on the vehicle, repair manuals, tyres, etc. This technical information on the identified vehicle ID, which constitutes in itself an identifier thereof, is supplied through the application 20 to the test module 12 following upon a step of selection of the diagnostic function 270, which activates the diagnostic modes of the test module 12, together with a set of tests TS(ID) specific for the identified vehicle ID for carrying out a diagnostic and error-checking procedure 300.

The above diagnostic and error-checking procedure 300 comprises a step 310 of selection on the test module 12 of the type of system to be diagnosed (for example, engine system or braking system).

A step 320 is then carried out for coming into contact with the control unit 14 indicated by step 310 in order to conduct the corresponding tests from among the diagnostic tests selected TS(ID) in step 310.

In an error-detection step 330 the responses to the tests are acquired from the control unit.

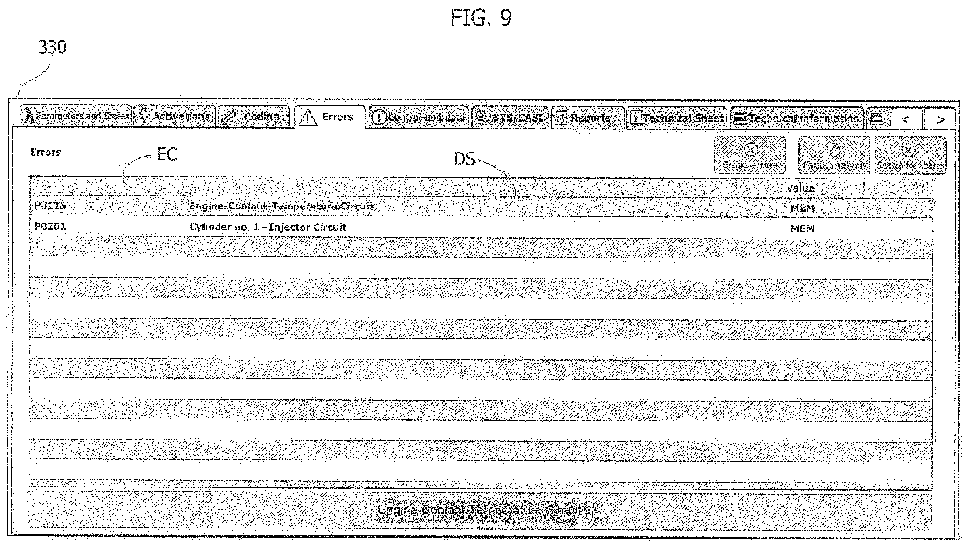

Figure 9 shows in this regard a screenful of the application 20, which indicates an error code EC and a description DS in natural error language, in particular a text description of the error that uses linguistic expressions with meaning. This description DS corresponding to an error code EC is fetched by the application 20 from the database of descriptions 22 of the errors that is made available and stored in the computer 11.

Once the errors have been detected (and, as shown hereinafter, possibly, their existence has been confirmed via steps of failure analysis), it is envisaged to carry out an operation of search for spare parts 400, by supplying, from the test module 12, through the application 20, the indication of the vehicle ID identified and the description DS of the error to the server 16 that hosts the spare-part database 23. On the remote server 16 a procedure is then carried out of search for the most likely spare part 420, which identifies a spare part R that may be suitable for repairing the failure that has generated the error description DS.

The procedure of spare-part search 400 also comprises a step 430 of retrieving from the spare-part database 23 spare-part information IR, which comprises, by way of example, the OE/IAM codes of the spare part, a spare-part description DSR, prices of the OE/IAM price list, working times T, and technical information. This spare-part information IR can be displayed by the client application 20 in communication with the server 16 on the computer 11. The spare-part search procedure 400 also comprises a step 440 of generation of an estimate, calculated on the basis of the errors indicated and of the spare parts R, with corresponding times of replacement and costs.

Hence, basically the vehicle diagnostic method 100 proposed comprises a procedure for diagnostic testing of the car that includes applying a set of diagnostic tests specific for the car TS(ID) and obtaining, on the basis of the set of tests TS(ID), error indications, such as error codes EC and hence error descriptions DS, representing faults in the car. The diagnostic method includes using the error indications, in particular the error descriptions DS, to access a data structure, the spare-part database 23, which is in particular located on a remote server 16, and comprises information regarding spare parts R of the car and obtaining information, such as the spare-part information IR, corresponding to the error indications EC supplied by the diagnostic tests TS(ID). The spare-part information IR indicates the most likely spare part R.

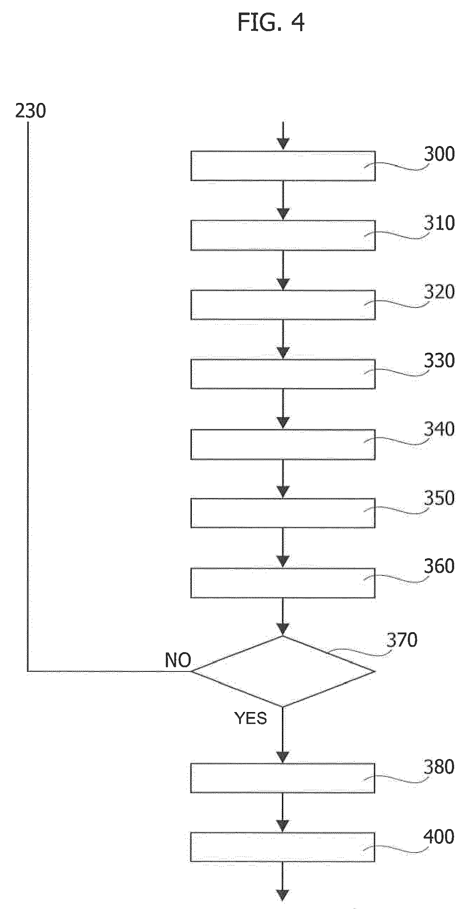

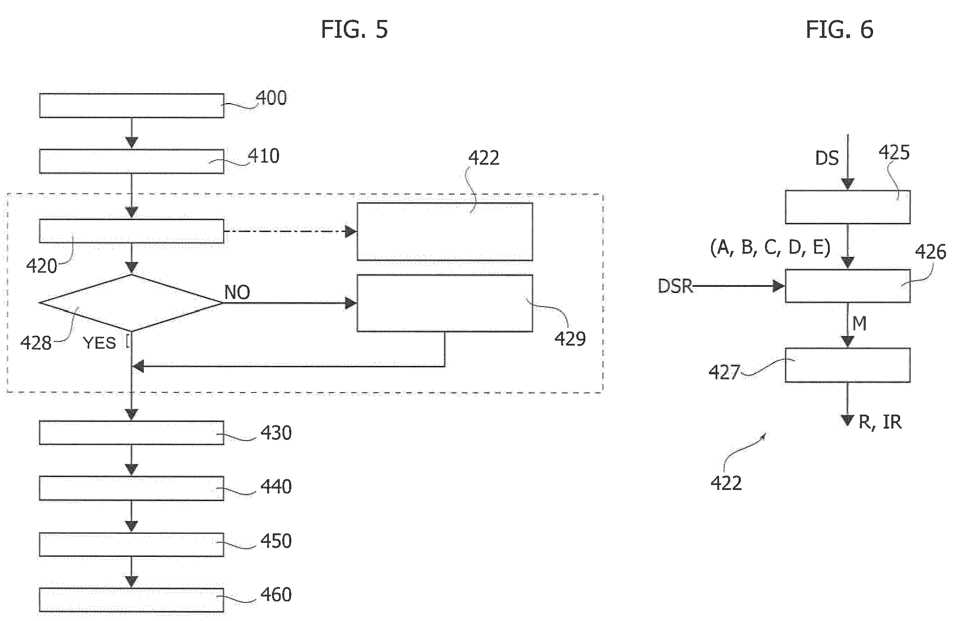

With reference to Figures 3, 4, and 5, shown therein is a flowchart representing a diagnostic method 100 implemented by the system 10 of Figure 1. This diagnostic method 100 comprises a vehicle-selection procedure 200 illustrated with reference to Figure 3, a diagnostic and error-checking procedure 300, shown in Figure 4, and a spare-part identification procedure 400, shown in Figures 5 and 6.

With reference to Figure 2, indicated therein is the step of starting of a vehicle interface, i.e., the graphic interface of the diagnostic application 20, executed on the computer 11 for controlling the test module 12, as well as the step 120 in which the application 20 sets up a connection with the vehicle database 21, preferably available on the spare-part server 16.

The vehicle-selection procedure 200 (which ultimately constitutes the first step of identification of the diagnostic tests to be applied to an identified vehicle ID) is then set underway.

In a step 230, the vehicle search mode is selected. The vehicle-selection procedure 200 enables in fact selection from a plurality of different search modes.

A first search mode envisages scanning of the vehicle identification code VIN 241, which is obtained by reading the code directly in the engine control unit (ECU). This mode of scanning the code VIN 241 comprises a step 242 of entering into communication with the engine control unit, in which the test module 12, under the command of the application 20 and through the connector 13, communicates with the ECU 14a, followed by a step 243 of verification of whether the code VIN has been detected by the ECU 14a. If it has not, control returns to step 230 of selection of the vehicle search mode; if it has, it proceeds to verifying, in a step 244, whether it is a case of partial selection and it is hence necessary to enter the engine code. If it is a case of partial selection, control returns to step 230 of selection of the search mode of the vehicle; if it is not, the menu 260 is represented for display of data regarding the identified vehicle ID (Figure 8).

A second search mode 245 envisages selection by entering the vehicle identification code VIN manually. Also in this case, there is envisaged, as for the mode 241, a step 246 of verifying whether it is a case of partial selection and it hence is necessary to enter the engine code.

A third search mode 247 envisages selection by entering the engine code. In this case, since one and the same engine code may correspond to a number of vehicles, a step 248 of partial manual selection of the vehicle is necessary.

A fourth search mode 249 envisages manual selection and comprises a step 250 of selection of the vehicle make, a step 251 of selection of the model, a step 252 of selection of the year of vehicle registration, a step 253 of selection of engine version and vehicle horsepower (for example, in kilowatts).

After each of these search modes 241, 245, 247, 249, 254, the specific vehicle ID is identified, and this is followed by the display step 260, which in the application 20 offers a display menu, as illustrated in Figure 8.

According to a further important aspect of the method described herein, a further vehicle search mode is envisaged, namely, a mode of selection according to number plate 254. This mode envisages that in a step 255 the user enters the vehicle number plate. The application 20 is configured for sending the vehicle number plate to a database, the number-plate database 24, which comprises data records, where associated to the vehicle number plate are data such as the make, the model, the year of registration, the engine version, and the identifier code of the selection made. These data hence enable the identifier code VIN to be obtained, as for example in the procedure 249.

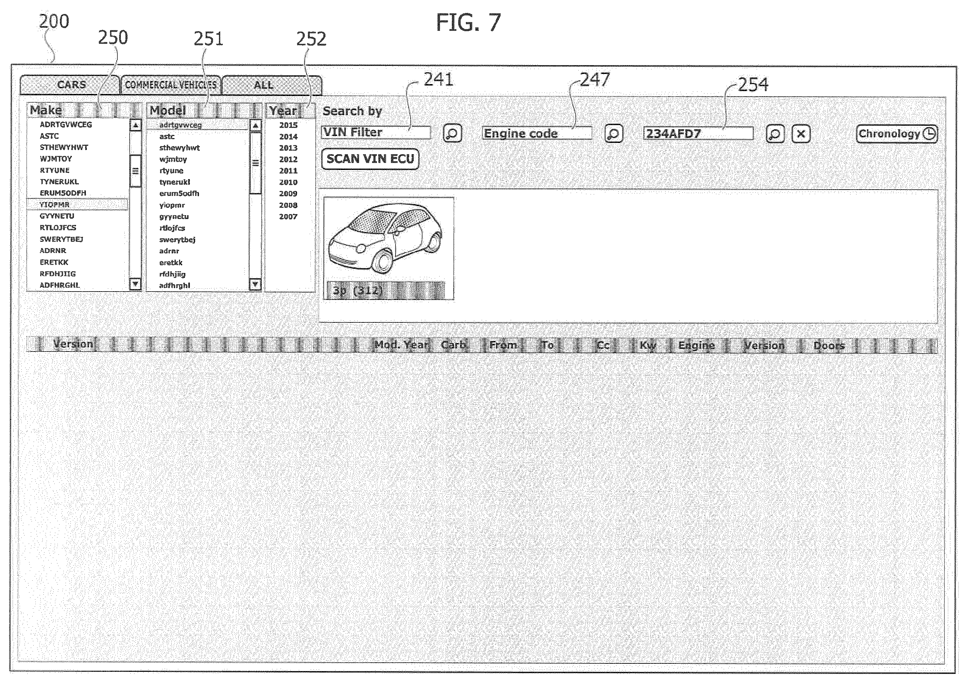

Figure 7 shows a screenful of the application 20 regarding the vehicle-selection procedure 200, the input masks for entry of the code VIN (mode 241), the engine code (mode 247), the number plate (mode 254), and selection lists for entry of the make according to the step 250, of the model according to the step 251, and of the year according to the step 252.

Once the identified vehicle ID has been retrieved in the data menu 260 a step is envisaged of activation of diagnosis 270 or selection of specific diagnostic function by accessing the diagnostic menu, in which the set of tests TS(ID) is developed for a specific identified vehicle ID. As already indicated with reference to Figure 2, in addition to diagnosis, at this level there is another set of further information 280 accessible via menu and regarding technical drawings, coupons, technical data, vehicle recalls, lubricants and fluids, electronics, courses of e-learning on the tests and on the vehicle, repair manuals, tyres.

The next step is to send the diagnostic information of the identified vehicle ID, i.e., the set of tests TS(ID) to the test module 12 for carrying out the diagnostic and error-checking procedure 300.

This procedure 300 comprises, in a step 310, selection on the test module 12 of the type of system to be diagnosed (for example, braking system).

A step 320 envisages entering into contact with the control unit indicated in step 310 of the selection system and supplying the tests accordingly selected in this step.

In an error-detection step 330, the responses to the tests are acquired from the control unit, as shown in the Figure 5 illustrated previously, where the error code EC and the description DS of the error in natural language are shown. This description DS corresponding to an error code EC is fetched by the application 20 from a database of descriptions 22 of the errors that are made available and stored in the computer 11.

The error-detection step 330 is followed by a step 340 of analysis of the failure.

Next, in a step 350, the error code EC and the selection of the identified vehicle ID are sent to the database 23 of the spare-part server 16, which provides corresponding information for display, in a step 360, of the error code EC, and other information, such as electrical diagrams and a component diagnostics.

In a step 370, it is evaluated whether, after the technical checks, the component is faulty.

If it is not, control returns to step 230; if it is, it is followed by the spare-part search procedure 400, illustrated in Figure 4.

In this procedure, in a step 410 the description of the error DS and the selection of the identified vehicle ID is sent to the spare-part database 23. This envisages also sending information on which of the control units has been diagnosed for identification of the error so as to circumscribe the search in the database 23.

There is then carried out a procedure of search for the most likely spare part 420 in the spare-part database 23. This spare-part database 23 is structured with records regarding each spare part, which comprise descriptions of the spare part DSR in natural language. This search procedure 420 comprises a search mechanism 422, which, as described in detail in Figure 6, comprises the following steps:
breaking down the description DS of the error into single words 425;
verifying 426, in the spare-part database 23, from all the descriptions of the spare parts DSR, matching on the basis of the number of words in common; a level of matching M, or reliability, is calculated preferably as percentage of words of the error description DS that match with a spare-part description DSR; and
identifying 427 the spare part R or the spare parts that provide the greatest number of words in common between their own description DSR and the description of the error DS as the spare part corresponding to the error.

In Table 1 below provided by way of example, the error description DS in natural language comprises the words A B C D E.

**Table 1**

| | | | | | | Reliability M | |
|---|---|---|---|---|---|---|---|
| Spare-part descrip. DSR | Word A | Word B | Word C | Word D | Word E | 5 words | % |
| 1 | 1 | | 1 | | 1 | 3 | 60 |
| 2 | | | | | | 0 | 0 |
| 3 | | 3 | | 3 | | 2 | 40 |
| 4 | | | | | | 0 | 0 |
| 5 | 5 | 5 | 5 | 5 | | 4 | 80 |
| 6 | 6 | | 6 | | | 2 | 40 |
| 7 | | | | | | 0 | 0 |
| 8 | | | | 8 | | 1 | 20 |
| 9 | | | | | | 0 | 0 |
| 10 | 10 | | | | | 1 | 20 |
| 11 | | | | | | 0 | 0 |
| 12 | | | | 12 | | 1 | 20 |
| 13 | | | | | | 0 | 0 |

The spare part R in row 5 of the table is the one having the highest matching level M, namely, 80%.

Once the procedure 420 for searching for the spare part R with the highest matching level from among the spare parts described in the spare-parts database 23 has been carried out, a check is made, in a step 428, to verify whether the spare part R has actually been found and, if so, in a step 430 the spare-part information is sent to the terminal 11 and to the application 20. If it has not, control passes to a step 429 of spare-part search through selection by spare-part code, by description of the spare part, or by sets of vehicle-system grouping.

This is followed by the step 430 for retrieving, from the spare-part database 23, spare-part information IR, which comprises, by way of example, the OE/IAM codes of the spare part, the spare-part description DSR, prices of the OE/IAM price list, working times T, and technical information. The above spare-part information IR can be displayed by the client application 20 in communication with the server 16 on the computer 11. In a step 440 (Figure 6), the application 20, on the basis of the times and costs for one or more spare parts, can compute the estimate for the repair.

In a step 450, the application 20 is configured for communicating with the server 23 or other servers of the spare-parts dealer and for ordering the spare part R.

The method 100 may also comprise a step of invoicing and issuing receipts 460 on the basis of the information regarding the above estimate.

Hence, with reference to what has been described in detail above, the diagnostic method presented herein, according to a further important aspect, moreover envisages that the operation of using error indications includes making available error descriptions DS in natural language associated in a database 22 on error indications EC supplied by the diagnostic tests TS.

Moreover, the diagnostic method described envisages that the data structure represented by the database 23 comprising information regarding spare parts R of the car includes for each spare part R a description of the spare part in natural language and that the information regarding spare parts of the car is obtained by evaluating a matching level between the error description DS and the descriptions of the spare part R, identifying as spare part R associated to a given error indication DS the spare part with the highest matching level.

Hence, from what have been described above, the advantages of the solution proposed emerge clearly.

The method and system described advantageously enable a user, in particular a mechanic, to obtain in a fast way information on the spare parts to be used in the case of failure, evaluation of the reliability of the information, and evaluation of the times and costs involved in the corresponding repair.

The method described moreover speeds up the step of selection of the vehicle, enabling identification of the vehicle by entering of the data on the number plate.

Of course, without prejudice to the principle of the invention, the details and the embodiments may vary, even considerably, with respect to what has been described herein purely by way of example, without thereby departing from the sphere of protection of the invention, as defined in the annexed claims.

In variant embodiments, the computer, in particular a portable personal computer, and the test module can be integrated in a single terminal with the capacity of carrying out diagnostic tests and of interfacing with the remote servers.

The method described may be applied to the diagnosis of vehicles such as cars, but also for diagnosis of other vehicles equipped with electronic control units, such as motorcycles or commercial vehicles.

## Claims

1. A method for diagnosing faults in a vehicle, in particular a car, comprising:
a procedure (100) for diagnostic testing of the vehicle, which comprises applying a set of diagnostic tests (TS) that are specific for the vehicle and obtaining, on the basis of said set of tests (TS), error indications (EC, DS) representing faults in said vehicle,
said method being **characterized in that** it comprises:
using (400) said error indications (DS) to access a data structure (23) comprising information (IR, DSR) regarding spare parts (R) of the vehicle, and obtaining information (IR, DSR) regarding spare parts (R) of the vehicle that corresponds to said error indications (DS) supplied by the diagnostic tests (TS).

2. The method according to Claim 1, **characterized in that** said operation of using (400) error indications includes making available error descriptions (DS) in natural language associated in a database (22) to the error indications (EC) supplied by said diagnostic tests (TS).

3. The method according to Claim 2, **characterized in that** said data structure (23) comprising information (IR, DSR) regarding spare parts (R) of the vehicle includes for each spare part (R) a description of the spare part (DSR) in natural language and **in that** said operation of obtaining information (IR, DSR) regarding spare parts (R) of the vehicle includes evaluating a level of matching (M) between an error description (DS) and said descriptions of the spare part (DSR), identifying as spare part associated to a given error indication (EC) the spare part with the highest matching level (M).

4. The method according to Claim 3, **characterized in that** it includes providing, in the information on the spare part (IR, DSR), the identification of the spare part (R) and the matching level (M).

5. The method according to Claim 4, **characterized in that** it further comprises providing, as information on the spare part (IR, DSR), the time and/or price of the intervention of repair associated to said spare part (R).

6. The method according to any of the preceding claims, **characterized in that** said diagnostic-testing procedure (100) comprises an operation of selection of the vehicle that envisages supplying (254) the information of vehicle number plate to identify the vehicle.

7. The method according to Claim 6, **characterized in that** it includes supplying the information of vehicle number plate to a remote database (24) and obtaining in response data identifying the vehicle.

8. A system for diagnosing faults in a vehicle, in particular a car, comprising a test module (12) configured for applying a set of diagnostic tests (TS) that are specific for the vehicle and obtaining, on the basis of said set of tests (TS), error indications (EC, DS) representing faults in said vehicle,
said system being **characterized in that** said test module (12) is associated to processing means (11) configured for communicating through communication networks (15) with server computers (16, 17) located remotely,
said system (10) being configured for performing the method according to any one of Claims 1 to 7.

9. The system according to Claim 8, **characterized in that** said test module (12) comprises means for interacting with a diagnostic connector (13) of the vehicle, and further means for testing electrical quantities regarding the vehicle, in particular oscilloscope or multi-meter means.

10. The system according to Claim 8 or Claim 9, **characterized in that** said test module (12) and said processing means (11) are integrated in one and the same computer terminal.
